# EUROPEAN PATENT SPECIFICATION

(11) **EP 2 401 575 B1**
(45) Date of publication and mention of the grant of the patent: **25.12.2019**
(21) Application number: 10746665.8
(22) Date of filing: 19.02.2010
(51) Int. Cl.: G01B 11/25

(54) **METHOD AND APPARATUS FOR GENERATING A DISPLAY OF A THREE-DIMENSIONAL SURFACE**
VERFAHREN UND VORRICHTUNG ZUR GENERIERUNG EINER ANZEIGE EINER DREIDIMENSIONALEN OBERFLÄCHE
MÉTHODE ET DISPOSITIF DE GÉNÉRATION D'AFFICHAGE D'UNE SURFACE TRIDIMENSIONNELLE

(30) Priority: 25.02.2009 US 155200 P; 25.02.2009 US 155260 P; 20.05.2009 US 179800 P
(43) Date of publication of application: 04.01.2012
(73) Proprietor: Dimensional Photonics International, Inc., Wilmington, Massachusetts 01887 (US)
(72) Inventor: DILLON, Robert, F., Bedford, New Hampshire 03110 (US); FILLION, Timothy I., Bedford, Massachusetts 01730 (US); KROHG, Olaf N., Topsfield, Massachusetts 01983 (US); JUDELL, Neil H. K., Cambridge, Massachusetts 02138 (US)
(74) Representative: Berggren Oy, Helsinki & Oulu
(86) International application number: PCT/US2010/024702
(87) International publication number: WO 2010/099036

(56) References cited:
- EP-B1- 0 895 577
- EP-B1- 0 895 577
- WO-A1-2006/084385
- US-A1- 2004 240 754
- US-A1- 2004 240 754
- US-A1- 2006 184 040
- US-A1- 2006 184 040
- US-A1- 2006 281 041
- US-A1- 2006 281 041
- US-A1- 2016 364 903
- US-B2- 7 098 435
- US-B2- 7 098 435
- US-B2- 7 187 809
- US-B2- 7 187 809

## Description

### FIELD OF THE INVENTION

The invention relates generally to the field of non-contact three-dimensional metrology and more specifically to the generation of grayscale and color displays for three-dimensional surface measurement data.

### BACKGROUND OF THE INVENTION

Precision non-contact three-dimensional ("3D") metrology techniques based on confocal imaging, structured light projection and fringe interferometry have been developed for a variety of applications such as dental and medical 3D imaging applications. Generally, these techniques are based on acquiring a set of two dimensional images and processing the images to generate a cloud of points representative of points on the surface of the measured object. 3D point clouds displayed on a monitor are typically difficult for a user to interpret, especially if at least one portion of the displayed surface is behind another portion of the displayed surface. Experienced users often rely on induced display motion to better distinguish or interpret different surface layers.

Artificial shading or coloring can be applied to each point in the 3D point cloud to improve the interpretation. Alternatively, an artificial surface can be generated by creating a triangular surface between each 3D point and its three closes points in the 3D point cloud. The triangular surfaces can be artificially shaded or colored to aid interpretation. Although these techniques can improve the ability to properly interpret the displayed 3D data, the resulting images typically appear significantly different from a direct observation of the object surface.

### SUMMARY OF THE INVENTION

In one aspect according to the independent claim 1, the invention features a method for generating a display of a 3D metrology surface. The method includes determining a 3D point cloud representation of a surface of an object in a point cloud coordinate space. An image of the object is acquired in a camera coordinate space. The image is mapped onto the 3D point cloud representation to generate a display of the surface of the object. In one embodiment, the image is transformed from the camera coordinate space to the point cloud coordinate space prior to mapping the image onto the 3D point cloud representation.

In another aspect according to the independent claim 5, the invention features an apparatus for generating a display of a 3D metrology surface. The apparatus includes a metrology system, an imaging system and a processor. The metrology system determines a 3D point cloud representation of a surface of an object in a point cloud coordinate space. The imaging system is configured to acquire an image of the surface of the object in a camera coordinate space. The processor is in communication with the metrology system and the imaging system. The processor is configured to map the image of the surface of the object onto the 3D point cloud representation to thereby generate a display of the surface of the object.

### BRIEF DESCRIPTION OF THE DRAWINGS

The above and further advantages of this invention may be better understood by referring to the following description in conjunction with the accompanying drawings, in which like numerals indicate like structural elements and features in the various figures. The drawings are not necessarily to scale, emphasis instead being placed upon illustrating the principles of the invention.
FIG. 1 is a block diagram of an embodiment of an apparatus for generating a display of a 3D metrology surface according to the invention.
FIG. 2 is a flowchart representation of an embodiment of a method for generating a display of a 3D metrology surface according to the invention.
FIG. 3 illustrates an example configuration of a non-contact 3D metrology system as is known in the art.
FIG. 4 illustrates the imaging system of FIG. 1 according to one embodiment of the invention.
FIG. 5 illustrates the imaging system of FIG. 1 according to another embodiment of the invention.
FIG. 6 is a flowchart representation of another embodiment of a method for generating a display of a 3D metrology surface according to the invention.
FIG. 7 is a block diagram of another embodiment of an apparatus for generating a display of a 3D metrology surface according to the invention.
FIG. 8 is a flowchart representation of another embodiment of a method for generating a display of a 3D metrology surface according to the invention.
FIG. 9 is a flowchart representation of another embodiment of a method for generating a display of a 3D metrology surface according to the invention.

### DETAILED DESCRIPTION

In brief overview the invention relates to a method and apparatus for generating a display of a 3D metrology surface. The method includes determining a 3D point cloud representation of a surface of an object in a point cloud coordinate space. An image of the object is acquired in camera coordinate space and mapped onto the 3D point cloud representation to generate a display of the surface of the object. If necessary, the image is transformed from the camera coordinate space to the point cloud coordinate space prior to being mapped onto the 3D point cloud representation.

The present teaching will now be described in more detail with reference to exemplary embodiments thereof as shown in the accompanying drawings. While the present teaching is described in conjunction with various embodiments and examples, it is not intended that the present teaching be limited to such embodiments. On the contrary, the present teaching encompasses various alternatives, modifications and equivalents, as will be appreciated by those of skill in the art. Those of ordinary skill in the art having access to the teaching herein will recognize additional implementations, modifications and embodiments, as well as other fields of use, which are within the scope of the present disclosure as described herein.

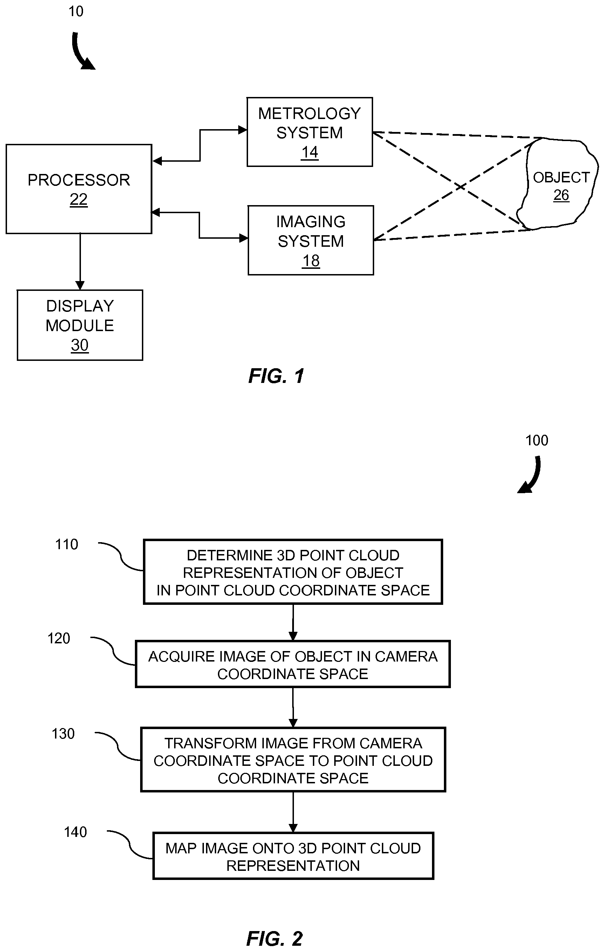

FIG. 1 shows an embodiment of an apparatus 10 for generating a display of a 3D metrology surface according to the invention. FIG. 2 is a flowchart representation of an embodiment of a method 100 for generating a display of the 3D metrology surface. The apparatus 10 includes a metrology system 14 and an imaging system 18 that communicate with a processor 22. The metrology system 14 determines (step 110) a 3D point cloud representation of a surface of an object 26 being measured and the imaging system 18 acquires (step 120) a two-dimensional ("2D") image of the surface of the object 26. The image can be a monochrome image having grayscale data. Alternatively, the image can be a color image, such as a RBG image, as is known in the art. Image data are referenced to a camera coordinate space that is typically defined by an array of imaging elements (e.g., camera pixels) and the optical components that generate the image of the object on the array.

The processor 22 receives 3D point cloud data from the metrology system 14 and image data from the imaging system 18. The processor 22 transforms (step 130) the image of the surface from the camera coordinate space into the coordinate space of the 3D point cloud and maps (step 140) the transformed image onto the 3D point cloud representation. The 3D point cloud and mapped image are presented as a single display to a user on a display module 30, enabling the user to more easily interpret 3D measurement data for the object surface. In one embodiment, the processor 22 includes a first processor and a second processor. The first processor performs the transformation (step 130) of the image from camera coordinate space into the 3D point cloud coordinate space and the second processor performs the mapping (step 140) of the transformed image onto the 3D point cloud representation.

The 3D point cloud can be presented in a user display in any one of a variety of formats. For example, the 3D point cloud can be presented as a wire-mesh surface. The wire-mesh surface is typically created by rendering a line connecting each 3D point with adjacent 3D points in the point cloud. In general, an adjacent point in the wire-mesh surface means one of the three nearest points. In another embodiment, the 3D point cloud is presented as an artificial surface created by rendering a triangular surface between each point in the 3D point cloud and its three adjacent points as is known in the art.

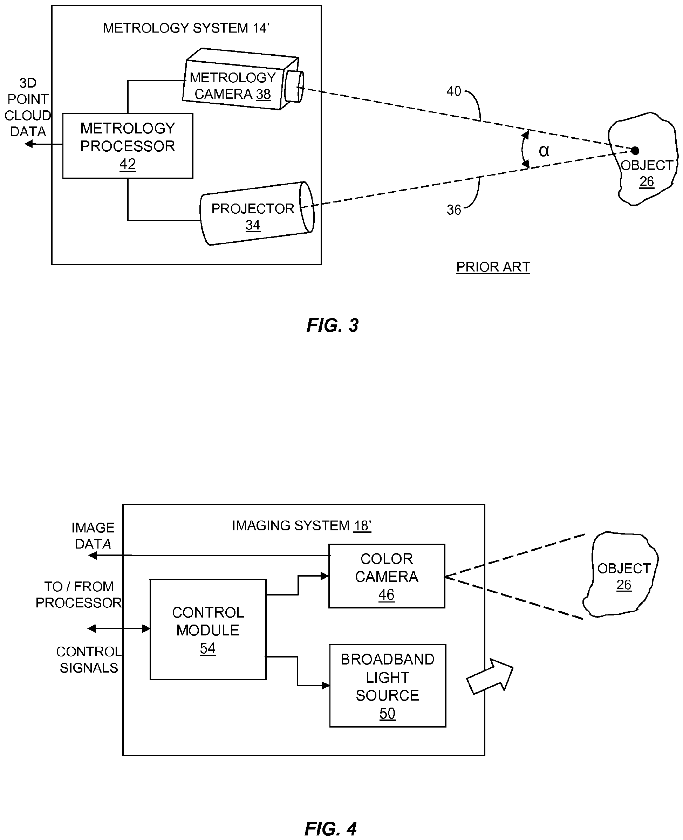

Various types of 3D metrology systems can be used to generate the 3D point cloud representation, including metrology systems based on confocal microscopy, the projection of structured light patterns that vary in shape, size, intensity and/or color, and interferometric fringe projection. FIG. 3 shows one example of a non-contact metrology system 14' that includes a metrology projection source 34, a metrology camera 38 and a metrology processor 42 as is known in the art. The projection source 34 and camera 38 are fixed in position relative to each other to accurately maintain a triangulation angle α between their optical axes 36 and 40, respectively. The projection source 34 is configured to illuminate the object 26 with different light patterns such as shadow mask patterns or interferometric fringe patterns. The camera 38 is a charge coupled device (CCD) camera or other digital imaging camera as is known in the art. Typically, sets of three or more 2D images are acquired by the camera 38 with each 2D image corresponding to a different illumination pattern or a common illumination pattern at a different position, or phase, on the object surface. The metrology processor 42 receives the images from the camera 38 and calculates the distance from the camera 38 to the object 26 for each camera pixel. The calculated distances are used in generating the 3D point cloud data that include 3D points at coordinates corresponding to points on the object surface.

In some embodiments, the metrology system 14' generates a dynamic 3D point cloud representation. For example, the metrology system 14' may be part of an intra-oral 3D imaging system where the metrology system moves with respect to the objects being measured (e.g., dental structures) during the measurement process. For such systems, multiple sets of 2D images are processed to generate a series of partially overlapping 3D point clouds. Each 3D point cloud is typically associated with a camera coordinate space that differs from the camera coordinate space of the other 3D point clouds. The metrology processor 42 registers the overlapped regions of adjacent 3D point clouds using a 3D correlation technique or other technique as is known in the art. Thus each successive 3D point cloud is stitched into the coordinate space corresponding to the initial camera location.

FIG. 4 shows an embodiment of the imaging system 18 shown in FIG. 1 that includes a color camera 46, a broadband light source 50 and a control module 54 that communicates with the camera 46, light source 50 and processor 22. The broadband light source 50 generates white light or light having a spectral distribution sufficient to illuminate the object 26 without significantly altering the appearance of the object 26 with respect to the true color of the object 26. The broadband light source 50 can be a white light emitting diode (LED). The control module 54 coordinates the operation of the broadband light source 50 and color camera 46 with respect to operation of the metrology system 14. In some embodiments, it is desirable to disable the light source 50 during intervals when a projection source in the metrology system 14 illuminates the object 26. In alternative embodiments, the broadband light source 50 continuously illuminates the object 26 regardless of the state of the projection source. Preferably, the control module 54 synchronizes color camera image acquisition with the image acquisition performed by a metrology camera. In some embodiments, the control module 54 activates the broadband light source 50 during image acquisition by the color camera 46 and disables the broadband light source when images are not being acquired by the color camera 46.

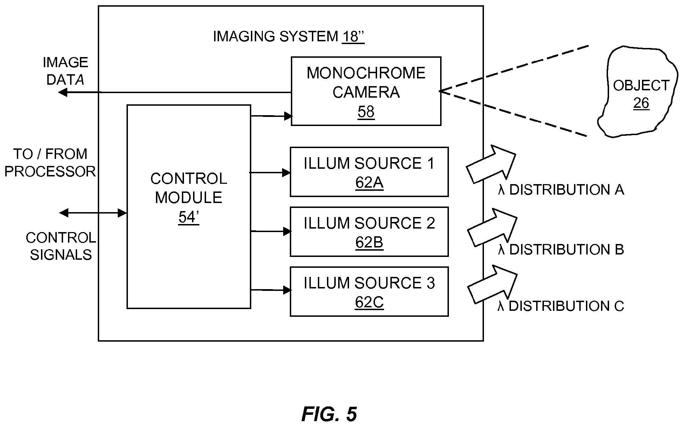

FIG. 5 shows an embodiment in which the imaging system 18 of FIG. 1 includes a control module 54', a monochrome camera 58 and a plurality of illumination sources 62A, 62B and 62C (generally 62). The control module 54' communicates with the monochrome camera 58, illumination sources 62 and the processor 22. Each illumination source 62 generates optical illumination having a wavelength distribution that is different, or unique, with respect to the wavelength distributions of the other illumination sources 62. The wavelength distributions can be single wavelengths (e.g., light generated by laser sources), narrow spectral bands (e.g., light generated by LEDs) or wider spectral bands characterized more generally by color range (e.g., red, green or blue light). For example, the illumination sources 62 can be selectively activated to illuminate the object being measured with red light, blue light and green light in a sequential manner. In one preferred embodiment, the illumination sources 62 are LEDs. In another embodiment, the illumination sources 62 are broadband light sources each having a unique color filter to spectrally limit the illumination to unique wavelength distributions.

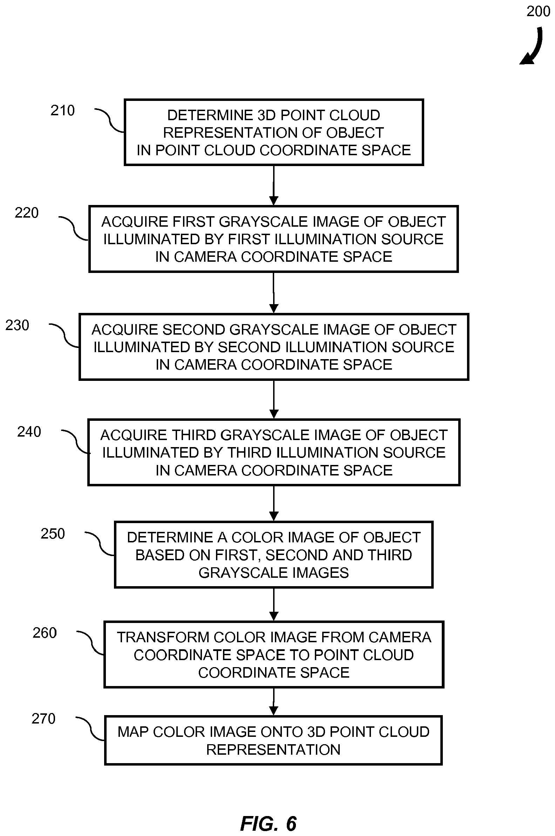

FIG. 6 is a flowchart representation of an embodiment of a method 200 for generating a display of a 3D metrology surface. Referring to FIG. 5 and FIG. 6, a metrology system determines (step 210) a 3D point cloud representation of an object in a point cloud coordinate space. The monochrome camera 58 acquires (step 220) a first grayscale image of the object illuminated by the first illumination source 62A. Subsequently, the monochrome camera 58 acquires (step 230) a second grayscale image of the object illuminated by the second illumination source 62B and acquires (step 240) a third grayscale image of the object illuminated by the third illumination source 62C. Calibration of the illumination sources 62 and monochrome camera 58 enables the processor 22 (see FIG. 1) to calculate a color image from the combination of grayscale images obtained for all of the illumination sources 62. The processor 22 thus calculates (step 250) a single color image for the object and transforms (step 260) the calculated color image from the camera coordinate space into the coordinate space of the 3D point cloud. The transformed color image is then mapped (step 270) onto the 3D point cloud representation.

Although three illumination sources are shown, it should be recognized that other numbers of illumination sources 62 can be used and other numbers of grayscale images acquired to generate a color image of the object 26. Furthermore, the timing of the acquisition of grayscale images can differ from that shown in FIG. 6. For example, the acquisition of the grayscale images used to compute a color image can be interleaved with the acquisition of images by a metrology camera used in measurements to generate 3D point cloud data.

In a dynamic 3D metrology system, the acquisition of the grayscale images can occur during relative motion between the metrology system and the object 26. Advantageously, a transform can be applied to the grayscale images or the color image to enable a more accurate mapping of the color image onto the stitched 3D point cloud. The transform can be interpolated from neighboring point cloud registration transforms and knowledge of system timing intervals.

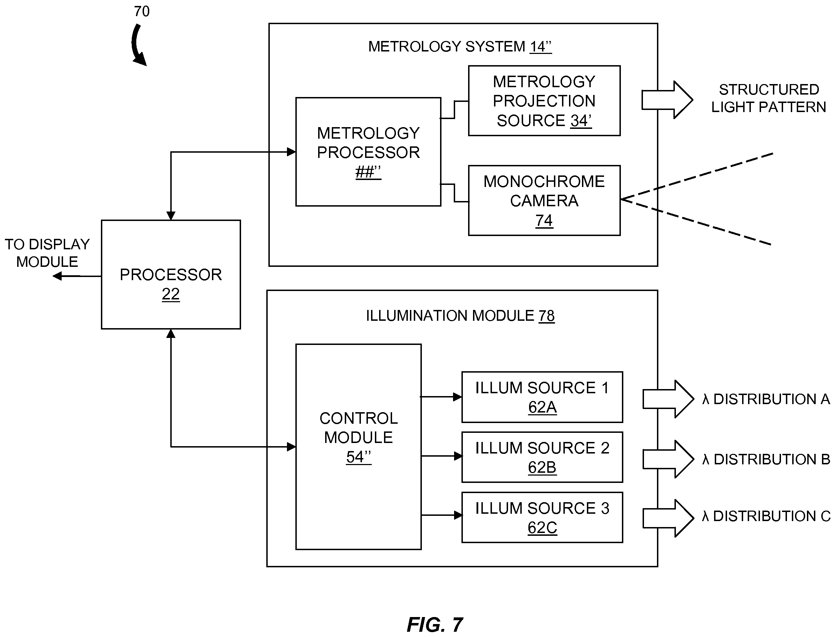

FIG. 7 shows another embodiment of an apparatus 70 for generating a display of a 3D metrology surface according to the invention in which image acquisition is performed solely by a monochrome camera 74 in the metrology system 14". Illumination of the object is achieved with an illumination module 78 that includes a control module 54"and a plurality of illumination sources 62 as described above with respect to FIG. 5. Acquisition of the grayscale images proceeds as described above with respect to the method 200 of FIG. 6. A single camera is used to obtain all images therefore the point cloud coordinate space and the camera coordinate space are the same coordinate space. Consequently, the transformation (step 260) of the color image between coordinate spaces is unnecessary.

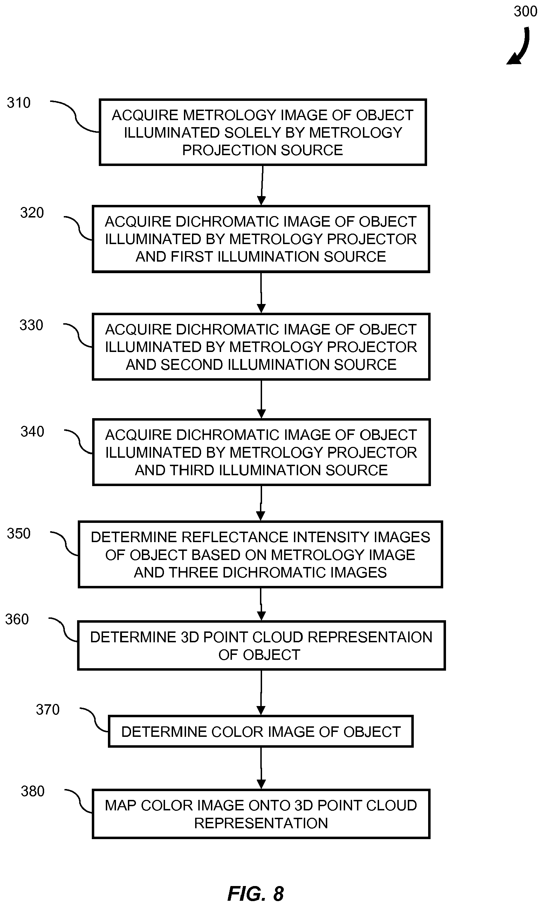

FIG. 8 is a flowchart representation of another embodiment of a method 300 for generating a display of a 3D metrology surface that can be performed using the apparatus 70 of FIG. 7. According to the method, a first image based on a "single illumination" using only the metrology projection source 34' is acquired (step 310). By way of example, the metrology projection source 34' can illuminate the object with a fringe pattern or other structured light pattern. Subsequently, a first dichromatic image of the object being measured is acquired (step 320) while the object is "concurrently illuminated" by the metrology projection source 34' and a first one of the illumination sources 62A. Thus the object is illuminated by light used to determine 3D point cloud data simultaneously with the light used to determine spectral reflectance.

The method 300 continues with the acquisition (step 330) of a second dichromatic image of the object during concurrent illumination by the metrology projection source 34' and the second illumination source 62B. Subsequently, a third dichromatic image is acquired (step 340) during concurrent illumination by the metrology projection source 34' and the third illumination source 62C. Using the four images acquired by the metrology camera 74, the reflectance intensity images for the object the three wavelength distributions of the illumination sources 62 are determined (step 350), allowing the fringe pattern or structured light illumination to be effectively separated from the three dichromatic images and used to determine (step 360) a 3D point cloud representation of the object. The three reflectance images are used to determine (step 370) a color image for the object and the color image is then mapped (step 380) onto the 3D point cloud representation.

One of skill in the art will recognize that the order in which the various images are acquired can be different. Moreover, the numbers of single illumination and concurrent illumination images acquired can be different without departing from the scope of the invention.

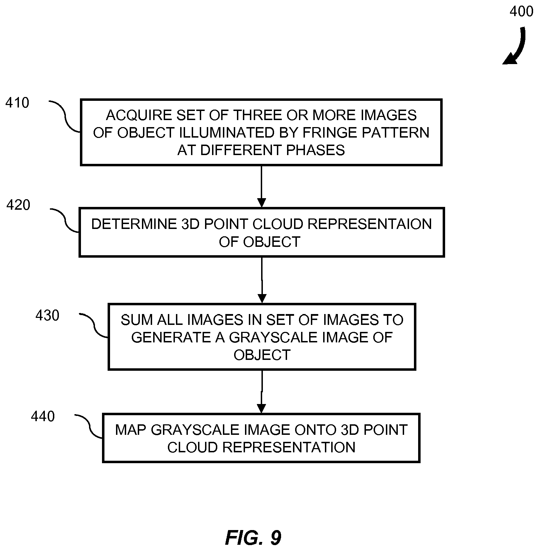

FIG. 9 is a flowchart representation of another embodiment of a method 400 for generating a display of a 3D metrology surface that can be performed using an apparatus in which the imaging system 18 of FIG. 1 is integrated into the metrology system 14. No illumination source other than a metrology projector 34 (see FIG. 3) is used. The projector 34 illuminates the object with a fringe pattern such as an interferometric fringe pattern generated by the interference of two beams of coherent optical radiation. A set of three or more images of the object illuminated by the fringe pattern are acquired (step 410). Each image includes the fringe pattern at a unique spatial phase and the spatial phases are equally spaced within 360° phase space. A 3D point cloud is calculated (step 420) from the image data for the fringe images. The images in the set of images are summed (step 430) to generate an image of the object with a spatially invariant intensity distribution. For example, for a set of three fringe images having fringe phases of 0°, 120° and -120°, all three images are summed to generate a grayscale reflectance image of the surface of the object. The reflectance image is mapped (step 440) onto the 3D point cloud representation to generate a single grayscale display image of the surface.

## Claims

1. A method (200) for generating a display of a three-dimensional (3D) metrology surface, the method comprising:
Illuminating an object (26) with a plurality of light patterns;
for each of the light patterns, acquiring an image of the object;
determining (110), from the acquired images, a 3D point cloud representation of a surface of an object in a point cloud coordinate space;
illuminating the object with broadband light;
acquiring a color image of the object in a color camera coordinate space while the object is illuminated by the broadband light;
transforming (130) the color image from the color camera coordinate space to the point cloud coordinate space; and
mapping (140) the color image transformed from the color camera coordinate space to the point cloud coordinate space onto the 3D point cloud representation to generate a display of the surface of the object.

2. The method of claim 1 wherein the 3D point cloud representation is a dynamic representation responsive to a relative motion between a 3D metrology measurement system and the object.

3. The method of claim 1, wherein the 3D point cloud representation is a wire mesh representation of the surface of the object.

4. The method of claim 1 wherein the 3D point cloud representation is an artificial surface representation of the surface of the object.

5. An apparatus (10) for generating a display of a three-dimensional (3D) metrology surface, comprising:
a metrology system (14) comprising a metrology camera (38) and configured to determine a 3D point cloud representation of a surface of an object (26) in a point cloud coordinate space defined by the metrology camera;
an imaging system (18) comprising:
a color camera (46);
a broadband light source (50); and
a control module (54) in communication with the color camera and the broadband light source, the control module configured to activate the broadband light source and to enable the color camera to acquire a color image of the object while the object is illuminated by the broadband light source,
wherein the imaging system is configured to acquire a color image of the surface of the object in a color camera coordinate space defined by the color camera; and
a processor (22) in communication with the metrology system and the control module, wherein the processor configured to receive the color image of the surface of the object, to transform the color image from the camera coordinate space to the point cloud coordinate space and to map the color image of the surface of the object onto the 3D point cloud representation to thereby generate a display of the surface of the object.

6. The apparatus of claim 5 wherein the processor comprises:
a first processor configured to transform the color image from the camera coordinate space to the point cloud coordinate space; and
a second processor configured to map the color image of the surface of the object onto the 3D point cloud representation.

7. The apparatus of claim 5, wherein the metrology system is an intra-oral 3D imaging system.

8. The apparatus of claim 5 wherein the 3D point cloud representation is a dynamic representation responsive to a relative motion between the metrology system and the object.

9. The method of claim 1 wherein the broadband light source comprises a white light light-emitting diode.

10. The apparatus of claim 5 wherein the metrology system comprises a monochrome imaging camera.

11. The apparatus of claim 10 wherein the control module is configured to synchronize the operation of the broadband light source and acquisition of color images by the color imaging camera with respect to an acquisition of monochrome images by the monochrome imaging camera.

12. The apparatus of claim 11 wherein the control module disables the broadband light source during intervals when a projection source in the metrology system illuminates the object.

## Patentansprüche

1. Verfahren (200) zur Generierung einer Anzeige einer dreidimensionalen (3D) Metrologieoberfläche, wobei das Verfahren umfasst:
Beleuchten eines Objekts (26) mit mehreren Lichtmustern;
für jedes der Lichtmuster, Erfassen eines Bildes des Objekts;
Bestimmen (110) einer 3D-Punktwolkendarstellung einer Oberfläche eines Objekts in einem Punktwolkenkoordinatenraum aus den erfassten Bildern;
Beleuchten des Objekts mit Breitbandlicht;
Erfassen eines Farbbildes des Objekts in einem Farbkamerakoordinatenraum, während das Objekt durch das Breitbandlicht beleuchtet wird;
Transformieren (130) des Farbbildes aus dem Farbkamerakoordinatenraum in den Punktwolkenkoordinatenraum; und
Abbilden (140) des aus dem Farbkamerakoordinatenraum in den Punktwolkenkoordinatenraum transformierten Farbbildes auf die 3D-Punktwolkendarstellung, um eine Anzeige der Oberfläche des Objekts zu generieren.

2. Verfahren nach Anspruch 1, wobei die 3D-Punktwolkendarstellung eine dynamische Darstellung ist, die auf eine Relativbewegung zwischen einem 3D-Metrologie-Messsystem und dem Objekt anspricht.

3. Verfahren nach Anspruch 1, wobei die 3D-Punktwolkendarstellung eine Drahtgitterdarstellung der Oberfläche des Objekts ist.

4. Verfahren nach Anspruch 1, wobei die 3D-Punktwolkendarstellung eine künstliche Oberflächendarstellung der Oberfläche des Objekts ist.

5. Vorrichtung (10) zur Generierung einer Anzeige einer dreidimensionalen (3D) Metrologieoberfläche, umfassend:
ein Metrologiesystem (14), das eine Metrologiekamera (38) umfasst und konfiguriert ist, eine 3D-Punktwolkendarstellung einer Oberfläche eines Objekts (26) in einem von der Metrologiekamera definierten Punktwolkenkoordinatenraum zu bestimmen;
ein Bildgebungssystem (18), das
eine Farbkamera (46) umfasst;
eine Breitbandlichtquelle (50); und
ein Steuermodul (54) in Kommunikation mit der Farbkamera und der Breitbandlichtquelle, wobei das Steuermodul konfiguriert ist, die Breitbandlichtquelle zu aktivieren und der Farbkamera zu ermöglichen, ein Farbbild des Objekts zu erfassen, während das Objekt durch die Breitbandlichtquelle beleuchtet wird,
wobei das Bildgebungssystem konfiguriert ist, ein Farbbild der Oberfläche des Objekts in einem von der Farbkamera definierten Farbkamerakoordinatenraum zu erfassen; und
einen Prozessor (22) in Kommunikation mit dem Metrologiesystem und dem Steuermodul, wobei der Prozessor konfiguriert ist, das Farbbild der Oberfläche des Objekts zu empfangen, um das Farbbild aus dem Kamerakoordinatenraum in den Punktwolkenkoordinatenraum zu transformieren und das Farbbild der Oberfläche des Objekts auf die 3D-Punktwolkendarstellung abzubilden, um dadurch eine Anzeige der Oberfläche des Objekts zu generieren.

6. Vorrichtung nach Anspruch 5, wobei der Prozessor umfasst:
einen ersten Prozessor, der konfiguriert ist, das Farbbild aus dem Kamerakoordinatenraum in den Punktwolkenkoordinatenraum zu transformieren; und
einen zweiten Prozessor, der konfiguriert ist, das Farbbild der Oberfläche des Objekts auf die 3D-Punktwolkendarstellung abzubilden.

7. Vorrichtung nach Anspruch 5, wobei das Metrologiesystem ein intraorales 3D-Bildgebungssystem ist.

8. Vorrichtung nach Anspruch 5, wobei die 3D-Punktwolkendarstellung eine dynamische Darstellung ist, die auf eine Relativbewegung zwischen dem Metrologiesystem und dem Objekt anspricht.

9. Verfahren nach Anspruch 1, wobei die Breitbandlichtquelle eine Weißlicht-Leuchtdiode umfasst.

10. Vorrichtung nach Anspruch 5, wobei das Metrologiesystem eine monochrome Bildgebungskamera umfasst.

11. Vorrichtung nach Anspruch 10, wobei das Steuermodul konfiguriert ist, den Betrieb der Breitbandlichtquelle und die Erfassung von Farbbildern durch die Farbbildkamera bezüglich einer Erfassung von Schwarzweißbildern durch die Schwarzweißbildkamera zu synchronisieren.

12. Vorrichtung nach Anspruch 11, wobei das Steuermodul die Breitbandlichtquelle während Intervallen deaktiviert, wenn eine Projektionsquelle in dem Metrologiesystem das Objekt beleuchtet.

## Revendications

1. Procédé (200) de génération d'un affichage d'une surface de métrologie tridimensionnelle (3D), ce procédé comprenant :
l'éclairage d'un objet (26) avec une pluralité de motifs lumineux ;
pour chacun des motifs lumineux, l'acquisition d'une image de l'objet ;
la détermination (110), à partir des images acquises, d'une représentation à nuage de points 3D d'une surface d'un objet dans un espace de coordonnées de nuage de points ;
l'éclairage de l'objet avec une lumière à large bande ;
l'acquisition d'une image en couleurs de l'objet dans un espace de coordonnées de caméra en couleurs pendant que l'objet est éclairé par la lumière à large bande ;
la transformation (130) de l'image en couleurs depuis l'espace de coordonnées de caméra couleurs jusqu'à l'espace de coordonnées de nuage de points ; et
la cartographie (140) de l'image en couleurs transformée depuis l'espace de coordonnées de caméra couleurs jusqu'à l'espace de coordonnées de nuage de points sur la représentation à nuage de points 3D pour générer un affichage de la surface de l'objet.

2. Procédé selon la revendication 1, dans lequel la représentation à nuage de points 3D est une représentation dynamique réactive à un mouvement relatif entre un système de mesure de métrologie 3D et l'objet.

3. Procédé selon la revendication 1, dans lequel la représentation à nuage de points 3D est une représentation en grillage de la surface de l'objet.

4. Procédé selon la revendication 1, dans lequel la représentation à nuage de points 3D est une représentation à surface artificielle de la surface de l'objet.

5. Appareil (10) pour la génération d'un affichage d'une surface de métrologie tridimensionnelle (3D), comprenant :
un système de métrologie (14) comprenant une caméra de métrologie (38) et conçu pour déterminer une représentation à nuage de points 3D d'une surface d'un objet (26) dans un espace de coordonnées de nuage de points 3D défini par la caméra de métrologie ;
un système d'imagerie (18) comprenant :
une caméra en couleurs (46) ;
une source de lumière à large bande (50) ; et
un module de commande (54) en communication avec la caméra en couleurs et la source de lumière à large bande, le module de commande étant conçu pour activer la source de lumière à large bande et pour permettre à la caméra en couleurs d'acquérir une image en couleurs de l'objet pendant que l'objet est éclairé par la source de lumière à large bande,
le système d'imagerie étant conçu pour acquérir une image en couleurs de la surface de l'objet dans un espace de coordonnées de caméra en couleurs défini par la caméra en couleurs ; et
un processeur (22) en communication avec le système de métrologie et le module de commande, le processeur étant conçu pour recevoir l'image en couleurs de la surface de l'objet, pour transformer l'image en couleurs depuis l'espace de coordonnées de caméra jusqu'à l'espace de coordonnées de nuage de points et pour cartographier l'image en couleurs de la surface de l'objet sur la représentation à nuage de points 3D pour générer ainsi un affichage de la surface de l'objet.

6. Appareil selon la revendication 5, le processeur comprenant :
un premier processeur conçu pour transformer l'image en couleurs depuis l'espace de coordonnées de caméra jusqu'à l'espace de coordonnées de nuage de points ; et
un second processeur conçu pour cartographier l'image en couleurs de la surface de l'objet sur la représentation à nuage de points 3D.

7. Appareil selon la revendication 5, dans lequel le système de métrologie est un système d'imagerie 3D intra-oral.

8. Procédé selon la revendication 5, dans lequel la représentation à nuage de points 3D est une représentation dynamique réactive à un mouvement relatif entre le système de métrologie et l'objet.

9. Procédé selon la revendication 1, dans lequel la source de lumière à large bande comprend une diode électroluminescente à lumière blanche.

10. Appareil selon la revendication 5, dans lequel le système de métrologie comprend une caméra d'imagerie monochrome.

11. Appareil selon la revendication 10, dans lequel le module de commande est conçu pour synchroniser le fonctionnement de la source de lumière à large bande et l'acquisition des images en couleurs par la caméra d'imagerie en couleurs par rapport à une acquisition d'images monochromes par la caméra d'imagerie monochrome.

12. Appareil selon la revendication 11, dans lequel le module de commande désactive la source de lumière à large bande pendant des intervalles lorsqu'une source de projection du système de métrologie éclaire l'objet.
